# EUROPÄISCHE PATENTSCHRIFT

(11) **EP 2 416 940 B1**
(45) Veröffentlichungstag und Bekanntmachung des Hinweises auf die Patenterteilung: **16.01.2013**
(21) Anmeldenummer: 10705392.8
(22) Anmeldetag: 26.02.2010
(51) Int. Cl.: B29C 65/08, B65B 51/22, B65B 51/30, B65B 9/08

(54) **VORRICHTUNG ZUM BEARBEITEN EINES PACKSTOFFS MITTELS ULTRASCHALL**
DEVICE FOR PROCESSING A PACKING MATERIAL USING ULTRASOUND
DISPOSITIF POUR TRAITER UN MATÉRIAU D'EMBALLAGE PAR ULTRASONS

(30) Priorität: 09.04.2009 DE 102009002295
(43) Veröffentlichungstag der Anmeldung: 15.02.2012
(73) Patentinhaber: Robert Bosch GmbH, 70442 Stuttgart (DE)
(72) Erfinder: IPPERS, Juergen, 47929 Grefrath (DE); WIEDUWILT, Ulrich, 73529 Schwaebisch Gmuend (DE)
(86) Internationale Anmeldenummer: PCT/EP2010/052484
(87) Internationale Veröffentlichungsnummer: WO 2010/115660

(56) Entgegenhaltungen:
- FR-A1- 2 732 264
- US-A- 4 517 790
- US-A1- 2004 011 452
- US-A1- 2006 144 904

## Beschreibung

### Stand der Technik

Die Erfindung geht aus von einer Vorrichtung zum Bearbeiten eines Packstoffs mittels Ultraschall nach der Gattung des unabhängigen Anspruchs. Eine solche gattungsgemäße Vorrichtung ist beispielsweise bekannt aus der US 2004/0011452 A1. Dort ist eine auf Ultraschall basierende Quersiegeleinrichtung für Riegelverpackungen beschrieben, die aus einer rotierenden Sonotrode und einem rotierenden Amboss besteht. Wie Sonotrode und Amboss jedoch mechanisch zueinander anzuordnen sind, ist nicht näher ausgeführt.

Der Erfindung liegt die Aufgabe zugrunde, eine kompakte und robuste Vorrichtung anzugeben. Diese Aufgabe wird gelöst durch die Merkmale des unabhängigen Anspruchs.

Aus der US 4,517,790 ist eine Ultraschallsiegeleinrichtung für Schlauchbeutelmaschinen bekannt. Hierbei führt die Sonotrode im Wesentlichen eine Hub- und Senkbewegung aus und wirkt mit einem rotieren Amboss zur Siegelung der Verpackungsfolie zusammen. Zur Einstellung des Siegelungsspalts lassen sich Sonotrode und Amboss relativ zueinander in einer linearen Bewegung verstellen.

Aus der US 2006/0144904 A1 ist bereits eine Ultraschallsiegelvorrichtung bekannt. Es ist eine im Wesentlichen lineare Führungsfläche in vertikaler Richtung vorgesehen.

### Vorteile der Erfindung

Die erfindungsgemäße Vorrichtung zum Bearbeiten eines Packstoffs mittels Ultraschall hat demgegenüber den Vorteil, dass ein einteiliger und kompakter Aufbau der Ultraschallsiegelstation möglich wird. Dadurch wird es möglich, konventionelle Heißsiegelvorrichtungen durch die erfindungsgemäße Vorrichtung zu ersetzen. Dadurch, dass zumindest ein Kopplungsmittel zwischen einem Lagerschild der Sonotrode und einem Lagerschild des Amboss vorgesehen ist, lassen sich alle notwendigen Einstellparameter für den Fügeprozess der Materialbahn präzise justieren. Weiterhin lässt sich die zur Ultraschallsiegelung notwendige Siegelkraft leicht über die so ausgebildete Vorrichtung aufbringen und einstellen. Das Kopplungsmittel kann bei einer geeigneten Auslegung im Überlastfall zur Aufnahme der Kräfte beim Siegeln und Schneiden des Packstoffs dienen. Das Kopplungsmittel ist nämlich insbesondere bei der Ausführung als Biegebalken in der Lage, den Siegelspalt zwischen Sonotrode und Amboss zu erhöhen, sofern im Fehlerfall ein Produkt oder ein Fremdkörper zwischen die Siegelstelle gerät.

In einer zweckmäßigen Weiterbildung ist vorgesehen, dass als Kopplungsmittel ein Biegebalken verwendet ist. Dieser ermöglicht eine Kopplung, die jedoch eine gewisse Relativbewegung von Sonotrode und Amboss zulässt. Im Gegensatz zu einem herkömmlichen Lager ist bei dem Biegebalken eine spielfreie leichtgängige Kopplung der beiden Lagerschilde für Amboss beziehungsweise Sonotrode möglich. Die Spielfreiheit des Kopplungsmittels macht sich für eine genaue Einstellung des Siegelspalts positiv bemerkbar. Außerdem verschmutzt der Biegebalken nicht so leicht, anders als bei einem konventionellen Lager. Zudem ist die Wärmedehnung des Biegestabs bei normalen Umgebungsbedingungen sehr gering und beeinflusst so die Spaltregulierung kaum. Weiterhin ist der Biegestab kostengünstig herstell- und austauschbar.

In einer zweckmäßigen Weiterbildung ist vorgesehen, dass der Biegestab an einer Position möglichst weit beabstandet von der Siegelstelle zwischen Sonotrode und Amboss anzubringen ist. Dann kann gegebenenfalls bei der Einstellung des Siegelspalts auf eine Nachjustierung der Walzenpositionen von Amboss und Sonotrode verzichtet werden. In einer zweckmäßigen Weiterbildung ist vorgesehen, dass die Befestigungselemente zur Befestigung des Biegebalkens mit den jeweiligen Lagerschilden an den jeweiligen äußeren Enden des Biegebalkens angebracht sind. Dies reduziert die Wahrscheinlichkeit von Nachjustierungen.

In einer zweckmäßigen Weiterbildung ist vorgesehen, dass der Biegebalken eine bestimmte Vorspannung aufweisen kann. Diese Vorspannung erhöht die Siegelkraft.

Weitere zweckmäßige Weiterbildungen ergeben sich aus weiteren abhängigen Ansprüchen und aus der Beschreibung.

### Zeichnung

Ausführungsbeispiele der Vorrichtung zum Bearbeiten eines Packstoffs mittels Ultraschall sind in der Zeichnung dargestellt und werden nachfolgend näher beschrieben.

Es zeigen:
Figur 1 eine perspektivische Vorderansicht der Vorrichtung zum Bearbeiten eines Packstoffs,
die Figur 2 die Rückansicht der Vorrichtung nach Figur 1,
die Figur 3 eine Seitenansicht eines Kopplungsmittels,
die Figur 4 eine Seitenansicht eines weiteren alternativen Kopplungsmittels,
die Figur 5 eine perspektivische Darstellung eines weiteren Ausführungsbeispiels der Vorrichtung zum Bearbeiten eines Packstoffs, erweitert um eine Verstelleinrichtung,
die Figur 6 eine Seitenansicht einer ersten Verstelleinrichtung,
die Figur 7 eine Seitenansicht einer zweiten Verstelleinrichtung sowie
die Figur 8 eine Seitenansicht einer dritten Verstelleinrichtung.

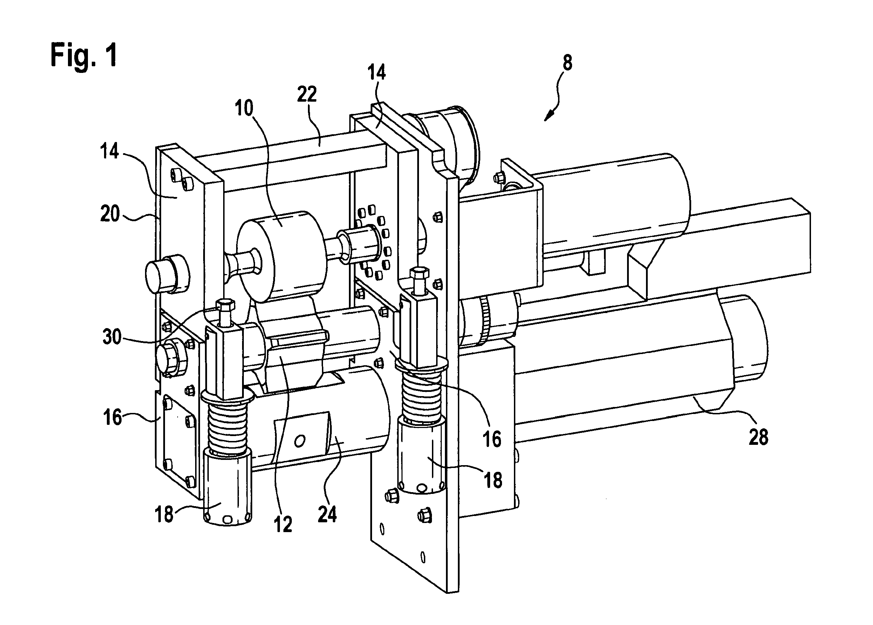

Bei der Vorrichtung gemäß Figur 1 wird eine Sonotrode 10 auf beiden Seiten von jeweils einem Lagerschild 14 drehbar gelagert geführt. Die beiden Lagerschilde 14 für die Sonotrode 10 sind an der Oberseite der Vorrichtung 8 durch ein oberes Trägermittel 22, hier beispielhaft als Trägerstab ausgeführt, seitlich miteinander verbunden. Mit der Sonotrode 10 wirkt ein ebenfalls rotierend gelagerter Amboss 12 zusammen. Der Amboss 12 ist in zwei Lagerschilden 16 gelagert. Das Lagerschild 14 der Sonotrode 10 ist mit dem jeweils darunter angeordneten Lagerschild 16 des Amboss 12 durch ein Kopplungsmittel 20 verbunden. Die beiden Lagerschilde 16 des Amboss 12 wiederum sind mit einem unteren Trägermittel 24 seitlich miteinander verbunden, welches beispielhaft als Trägerrohr ausgebildet ist. Auf der bezogen auf die Rotationsachsen von Sonotrode 10 bzw. Amboss 12 gegenüberliegenden Seite des Kopplungsmittels 20 sind jeweils Kraftmittel 18 angeordnet, über die die notwendige Siegelkraft auf die Siegelfläche von Sonotrode 10 und Amboss 12 aufgebracht werden kann. Oberhalb der Kraftmittel 18 sind jeweils Einstellmittel 30 vorgesehen. Dadurch lassen sich Siegelkraft bzw. Siegelspalt justieren.

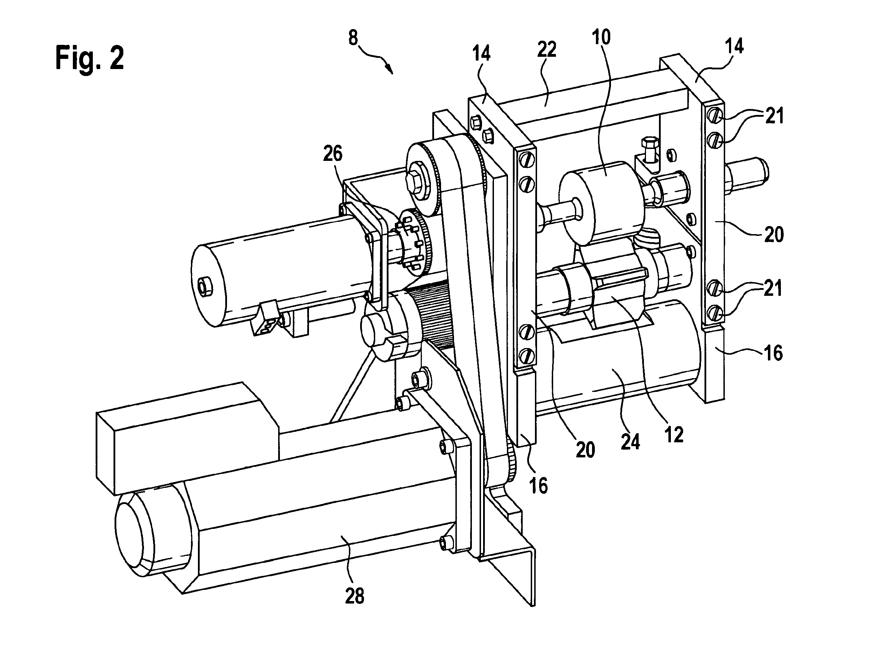

Bei der in Figur 2 gezeigten Rückansicht der in Figur 1 beschriebenen Vorrichtung 8 wird deutlich, dass das Lagerschild 14 der Sonotrode 10 jeweils mit dem darunter angeordneten Lagerschild 16 des Amboss 12 über das Kopplungsmittel 20, welches beispielhaft hier als Biegebalken ausgeführt ist, miteinander verbunden sind. Das Kopplungsmittel 20 ist am oberen Ende mit zwei Befestigungselementen 21 stirnseitig mit dem Lagerschild 14, am unteren Ende mit zwei Befestigungselementen 21 mit dem Lagerschild 16 verbunden. Dabei ist ein Spalt zwischen der Unterkante des Lagerschilds 14 der Sonotrode 10 und der Oberkante des Lagerschilds 16 des Amboss 12 vorgesehen, der lediglich durch das Kopplungsmittel 20 überbrückt wird. Weiterhin ist ein Antrieb 28 vorgesehen, der über ein Antriebselement 26 sowohl die Sonotrode 10 wie auch den Amboss 12 gegenläufig antreibt.

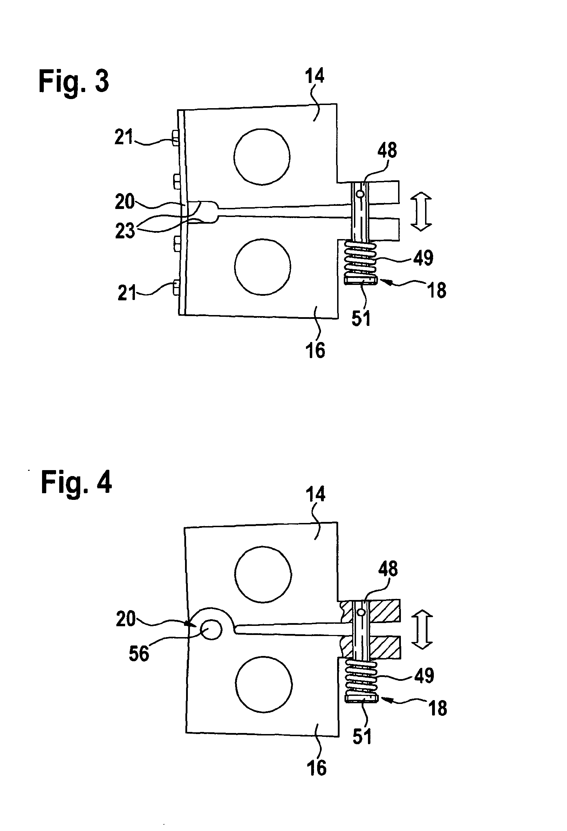

Bei der Ansicht gemäß Figur 3 sind die Lageraufnahmen für die rotierende Sonotrode 10 und den rotierenden Amboss 12 als runde Öffnungen zu sehen. Das Lagerschild 14 der Sonotrode 10 ist mit dem Lagerschild 16 des Ambosses 12 auf der einen Seite durch das als Biegebalken ausgeführte Kopplungsmittel 20 verbunden. Auf der gegenüberliegenden Seite beaufschlagt das Kraftmittel 18 über das als Gelenk wirkende Kopplungsmittel 20 die Lagerschilde 14, 16 mit einer Kraft zueinander. In Richtung zum Kopplungsmittel 20 hin weisen die Lagerschilde 14, 16 jeweils Ausnehmungen 23 auf. Die gewünschte Biegefähigkeit des Biegestabs 20 lässt sich durch die so entstehende Biegelänge beeinflussen. Bei der gezeigten Anordnung wirkt der Biegebalken als Drehpunkt, über den sich der Abstand zwischen Sonotrode 10 und Amboss 12 variieren lässt. Die Ausführung des Kopplungsmittels 20 als Biegebalken bietet eine relative starre, aber dennoch gelenkige Verbindung zwischen den beiden Lagerschilden 14, 16. Die Verwendung eines Biegestabs als Kopplungsmittel 20 wirkt auch im Falle eines Crashs als Überlastschutz. So lässt der Biegebalken 20 ein definiertes Öffnen und Verbiegen des Siegelspaltes zwischen Sonotrode 14 und Amboss 16 auch für den Fall zu, dass sich beispielsweise ein Produkt oder ein Fremdkörper zwischen Sonotrode 10 und Amboss 12 verklemmen sollte. Dadurch wird eine Beschädigung von Sonotrode 10 und Amboss 12 verhindert, da der Biegebalken 20 eine Vergrößerung des Siegelspalts zulässt. Der Biegebalken besteht vorzugsweise aus einem metallischen Werkstoff.

Je nach Einstellung lässt sich der Siegelspalt zwischen Sonotrode 10 und Amboss 12 variieren. Das Kraftmittel 18 bewirkt, dass oberes und unteres Lagerschild 14, 16 um den Drehpunkt 56 aufeinander zu bewegt würden und so eine Kraft auf die Spiegelflächen aufbringen. Hierzu ist ein Stößel 48 auf der einen Seite mit dem Lagerschild 14 der Sonotrode 10 verbunden, so dass eine Bewegung des Stößels 48 auch eine Bewegung des Lagerschilds 14 bewirkt. Der Stößel 48 wird durch eine Öffnung im Lagerschild 16 des Amboss 14 bewegbar zum Lagerschild 16 durchgeführt läuft in einem Flansch 51 aus. Der Flansch 51 dient als Auflagefläche für eine Feder 49, die sich auf der anderen Seite gegenüber der Unterseite des Lagerschilds 16 des Amboss 12 abstützt. Die Feder 49 ist als Spiralfeder ausgeführt und umgibt den Stößel 48. Das Kraftmittel 18 ist vorzugsweise justierbar ausgeführt. Hierzu könnte beispielsweise das Einstellmittel 30 in Form einer Schraube die Vorspannung der Feder 49 und damit letztlich die Siegelkraft verändern.

Bei dem Ausführungsbeispiel gemäß Figur 4 ist als Kopplungsmittel 20 eine Buchsen-Bolzenverbindung vorgesehen, die eine Drehbewegung der beiden Lagerschilde 14, 16 zueinander um einen Drehpunkt 56 ermöglicht. Wesentlich ist jedoch, dass das Kopplungsmittel 20 eine Relativbewegung zwischen dem Lagerschild 14 der Sonotrode 10 und dem Lagerschild 16 des Amboss 12 in der Weise zulässt, dass sich Sonotrode 10 und Amboss 12 relativ zueinander bewegen lassen, um die Einstellung eines Siegelspalts je nach Packstoff vorzusehen. Die Drehachse um den Drehpunkt 56 ist parallel zur Rotationsachse von Sonotrode 10 und Amboss 12.

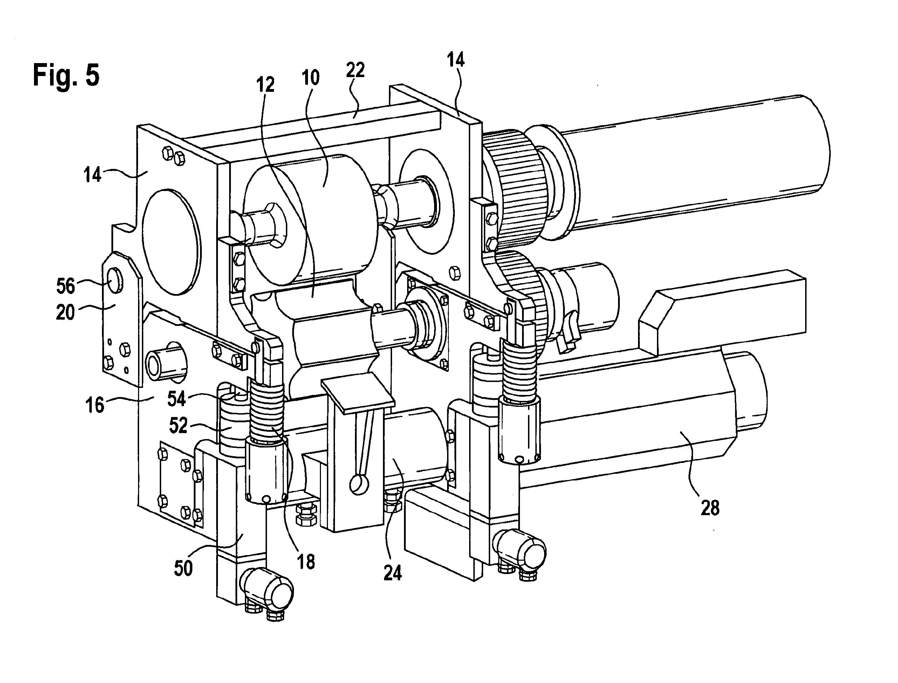

Das Ausführungsbeispiel gemäß Figur 5 unterscheidet sich von denjenigen der Figuren 1 und 2 im Wesentlichen darin, dass zusätzlich Verstellmittel 50 vorgehen sind. Die Verstellmittel 50 umfassen eine Kupplung 52 und einen Gewindebolzen 54 zur Spaltverstellung, indem sie das Lagerschild 14 der Sonotrode 10 relativ zu dem Lagerschild 16 des Amboss 12 verstellen. Außerdem ist bei dem Ausführungsbeispiel gemäß Figur 5 das Kopplungsmittel 20 seitlich angeordnet. Hierbei ist ein Bolzen mit dem Lagerschild 14 der Sonotrode 10 sowie eine entsprechend in den Bolzen greifende Buchse mit dem Lagerschild 16 des Amboss 12 im Drehpunkt 56 gekoppelt.

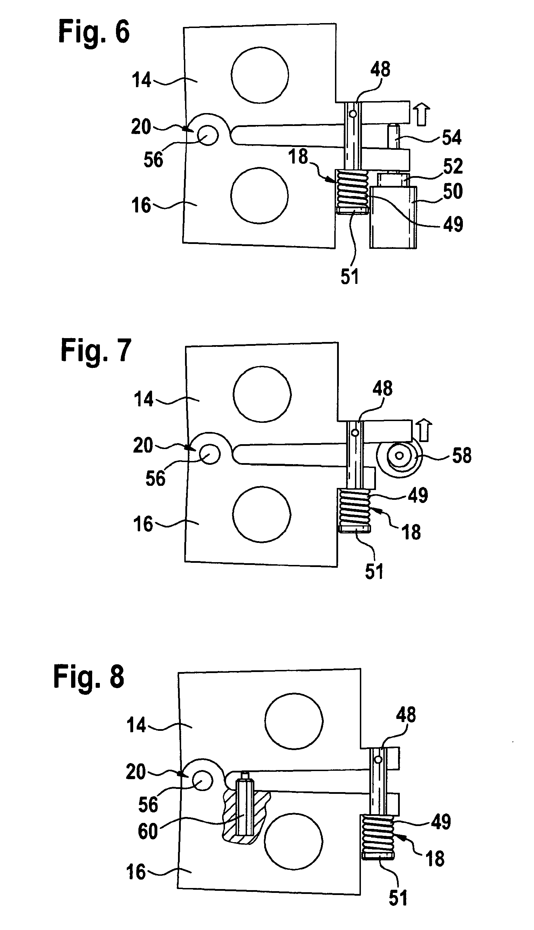

In den Ausführungsbeispielen gemäß den Figuren 6 bis 8 sind unterschiedliche Varianten der Verstellmöglichkeiten zwischen Lagerschild 14 der Sonotrode 10 und Lagerschild 16 des Amboss 12 gezeigt. Die Figur 6 entspricht der in Figur 5 dargestellten Variante, wo das Verstellmittel 50 über die Kupplung 52 und den Gewindebolzen 54 gegen die Unterkante des Lagerschilds 14 der Sonotrode 10 drückt und so eine Relativbewegung um den Drehpunkt 56 erzielt. Das Verstellmittel 50 ist möglichst weit entfernt vom Drehpunkt 56 angeordnet. Als Verstelleinrichtung 50 ist beispielsweise ein Servomotor vorgesehen, der über den Gewindebolzen 54 eine translatorische Bewegung auf das Lagerschild 14 ausübt. Das untere Lagerschild 16 wird hier quasi als Basis fungieren und das obere Lagerschild 14 beim Herausdrehen des Gewindebolzens 54 über diesen nach oben drücken. Die Kraftmittel 18 sorgen außerdem dafür, dass das obere Lagerschild 14 immer an dem Gewindebolzen 54 anliegt und sich so auch beim Eindrehen des Gewindebolzens 54 nach unten bewegt. Dank des kontinuierlich von oben wirkenden Drucks macht sich das Gewindespiel nicht negativ bemerkbar. Der Einsatz jeweils eines Servomotors mit Gewindebolzen 54 im linken und rechten Lagerschild 14, 16 gibt die Möglichkeit, die Sonotrode 10 und den Amboss 12 automatisch zueinander parallel auszurichten. Bei dem Ausführungsbeispiel gemäß Figur 6 können sehr kleine wie auch größere Stellwege sehr genau erreicht werden.

Bei dem Ausführungsbeispiel gemäß Figur 7 lässt sich der Abstand über einen Exzenter 58 verändern, der parallel zur Rotationsachse von Sonotrode 10 und Amboss 12 drehbar gelagert ist. Wiederum bewirkt das Kraftmittel 18 eine Vorspannung zwischen den beiden Lagerschilden 14, 16. Die Drehbewegung eines Servomotors wird über die Exzenterscheibe 58 in eine translatorische Bewegung umgesetzt. Während die Exzenterscheibe 58 fest gelagert ist, werden die oberen Lagerschilde 14 über die Exzenterscheiben 58 angehoben bzw. abgesenkt.

Bei dem Ausführungsbeispiel gemäß Figur 8 ist ein Aktor 60 vorgesehen, der relativ nahe am Drehpunkt 56 angreift. Bei dem Aktor handelt es sich beispielsweise um einen Piezoaktor 60, der elektrische Energie in eine mechanische Wegänderung umwandelt. Piezoaktoren 60 sind deshalb so vorteilhaft, weil sie Bewegungen im Sub-Nanometerbereich durchführen können. Weiterhin sind Piezoaktoren 60 wartungs- und verschleißfrei. In dem statischen Betrieb benötigen sie keine Leistung. Außerdem können hohe Lasten bewegt werden.

Die Vorrichtung 8 zum Bearbeiten eines Packstoffs mittels Ultraschall arbeitet wie folgt. Sie umfasst als wesentliches Element die Sonotrode 10, die als aktives Schweißwerkzeug gegen den Amboss 12 wirkt. Von einem elektrischen Generator wird die Netzspannung in eine hochfrequente elektrische Spannung umgewandelt. An den Generator ist ein Schallwandler (Converter) angeschlossen, der wiederum die elektrische Energie in hochfrequente mechanische Schwingungen umwandelt. Mittels eines Amplitudentransformationsstücks (Booster) werden die Amplituden verstärkt oder verringert und vom Converter auf die Sonotrode 10 übertragen. Der Amboss 12 ist das passive Werkstück. Zwischen Amboss 12 und Sonotrode 10 wird das zu verschweißende Werkstück, beispielsweise der Packstoff, eingeklemmt, um so den Energieübergang zwischen Sonotrode 10 und dem Packstoff zu ermöglichen. Der Amboss 12 absorbiert die Ultraschallschwingungen der Sonotrode 10. Sowohl Sonotrode 10 als auch Amboss 12 rotieren gegenläufig und sind quasi als Siegelwalzen ausgeführt. Sie weisen mehrere Siegelflächen auf, in denen auch eine Schneidfunktion zur Abtrennung des Packstoffes integriert sein kann. Abhängig von der Art des Packstoffes muss mit hoher Genauigkeit ein Siegelspalt eingestellt werden. Als Siegelspalt bezeichnet man den Abstand der Siegelfläche der Sonotrode 10 von der Siegelfläche des Amboss 12. Dieser Siegelspalt wird durch beispielhaft in den Figuren 5 bis 8 dargestellte Verstellmittel wie Verstellantrieb 50, Exzenter 58 oder Aktor 60 in der gewünschten Größe verstellt. Sie wirken auf zumindest ein Lagerschild 14 relativ zum anderen Lagerschild 16 ein. Sollte sich im laufenden Betrieb die Größe des Siegelspalts verändern, können die Verstellmittel 50 diesen wieder auf die gewünschte Sollgröße bringen. Das beispielsweise als Feder ausgeführte Kraftmittel 18 am Ende der Lagerschilde 14, 16 dient dazu, die Lagerschilde 14, 16 zusammenzudrücken und die notwendige Siegel- beziehungsweise Schneidkraft aufzubringen. Außerdem wirken durch den Zahnriemenantrieb Kräfte auf die Sonotrode 10, die die oberen Lagerschilde 14 abheben würden, was das Kraftmittel 18 verhindert. Das Kraftmittel 18 könnte anstelle einer Feder auch pneumatisch oder hydraulisch ausgeführt sein. Die Kopplungsmittel 20 dienen der beweglichen Verbindung des Lagerschilds 14 der Sonotrode 10 mit dem Lagerschild 16 des Amboss. Neben den beschriebenen Varianten könnten auch Linearführungen wie beispielsweise Säulenführungen vorgesehen werden, die eine relative Linearbewegung der Lagerschilde 14, 16 zueinander zulassen.

Die Lagerschilde 14 bilden Seitenwangen, welche mit dem Trägermittel, nämlich dem Trägerstab 22, miteinander verbunden sind. Das Trägerrohr 24 könnte auch zur Stabilisierung und als Aufnahmemöglichkeit in der Verpackungsmaschine dienen. Die Antriebskopplung der oberen und unteren Siegelwalze (Sonotrode 10 und Amboss 12) erfolgt über Zahnriemen. Die Rotationsgeschwindigkeit der Siegelwalzen richtet sich nach der Bahngeschwindigkeit des zur siegelnden Packstoffschlauchs und kann z.B. ereignisgesteuert sein. Diese Dynamik wird mittels des Antriebs 28, beispielsweise ein Servomotor, erreicht, welcher die Kräfte und Momente mittels eines als Zahnriemen ausgeführten Antriebselements 26 überträgt. Die beschriebene Vorrichtung ermöglicht, die für den Fügevorgang mittels Ultraschall notwendigen Parameter wie beispielsweise Siegelspalt, Siegelkraft und Siegelzeit sehr genau und anwendungsgerecht einzustellen. Die Einstellung der Siegelkraft lässt sich über die Kraftmittel 18 realisieren. Die Kraftmittel sind beispielsweise als Federn ausgeführt, so dass die Einstellung der Siegelkraft linear zur Federkennlinie möglich ist. Die Kraftmittel 18 wirken auf die beiden Lagerschilde 14, 16, so dass die Siegelkraft zwischen der oberen Siegelwalze, der Sonotrode 10, und der unteren Siegelwalze, dem Amboss 12, einzustellen ist.

Die beschriebene Vorrichtung 8 eignet sich insbesondere für die Aufbringung einer Quersiegelnaht für Schlauchbeutel. Solche Schlauchbeutelmaschinen können je nach zu verpackendem Produkt horizontal oder vertikal angeordnet sein.

## Patentansprüche

1. Vorrichtung zum Bearbeiten eines Packstoffs mittels Ultraschall, umfassend zumindest ein Lagerschild (14),
zumindest eine Sonotrode (10), die in dem Lagerschild (14) rotierend gelagert ist, zumindest einen Amboss (12), der mit der Sonotrode (10) zur Bearbeitung des Packstoffs zusammenwirkt,
zumindest ein weiteres Lagerschild zur rotierenden Lagerung des Amboss (12), wobei zumindest ein Kopplungsmittel (20) vorgesehen ist zur mechanischen Kopplung der beiden Lagerschilde (14, 16), **dadurch gekennzeichnet, dass** das Kopplungsmittel (20) so mit den Lagerschilden (14, 16) verbunden ist, dass eine Drehbewegung der beiden Lagerschilde (14, 16) zueinander möglich ist.

2. Vorrichtung nach einem der vorhergehenden Ansprüche, **dadurch gekennzeichnet, dass** als Kopplungsmittel (20) zumindest ein Biegebalken vorgesehen ist.

3. Vorrichtung nach einem der vorhergehenden Ansprüche, **dadurch gekennzeichnet, dass** als Kopplungsmittel (20) zumindest ein Gelenk oder eine Buchse-Bolzen-Verbindung vorgesehen ist.

4. Vorrichtung nach einem der vorhergehenden Ansprüche, **dadurch gekennzeichnet, dass** zumindest in einem der Lagerschilde (14, 16) zumindest eine Ausnehmung (23) vorgesehen ist, insbesondere zur Beeinflussung des Biegeverhaltens des Kopplungsmittels (20).

5. Vorrichtung nach einem der vorhergehenden Ansprüche, **dadurch gekennzeichnet, dass** Verstellmittel (50, 54, 58, 60) vorgesehen sind zur Einstellung des definierten Spalts zwischen Sonotrode (10) und Amboss (12).

6. Vorrichtung nach einem der vorhergehenden Ansprüche, **dadurch gekennzeichnet, dass** als Verstellmittel ein Servoantrieb (50), ein Piezoaktor (60) oder eine Exzenterscheibe (58) vorgesehen sind.

7. Vorrichtung nach einem der vorhergehenden Ansprüche, **dadurch gekennzeichnet, dass** zumindest ein Kraftmittel (18) zum Aufbringen einer Gegenkraft zwischen den beiden Lagerschilden (14, 16) vorgesehen ist.

8. Vorrichtung nach einem der vorhergehenden Ansprüche, **dadurch gekennzeichnet, dass** zumindest ein Einstellmittel (30) für das Kraftmittel (18) vorgesehen ist zum Justieren der Gegenkraft.

9. Vorrichtung nach einem der vorhergehenden Ansprüche, **dadurch gekennzeichnet, dass** das Kraftmittel (18) zumindest eine Feder (49) aufweist, die so angeordnet ist, dass die beiden Lagerschilde (14, 16) gegeneinander vorgespannt sind.

10. Vorrichtung nach einem der vorhergehenden Ansprüche, **dadurch gekennzeichnet, dass** Kraftmittel (18) zumindest einen Stössel (48) umfassen, der sowohl mit zumindest einem Lagerschild (14) wie auch mit der Feder (49) verbunden ist.

11. Vorrichtung nach einem der vorhergehenden Ansprüche, **dadurch gekennzeichnet, dass** weitere Lagerschilde (14, 16) vorgesehen sind zur zweiseitigen Lagerung von Sonotrode (10) und/oder Amboss (12).

## Claims

1. Device for processing a packing material by means of ultrasound, comprising
at least one bearing shield (14),
at least one sonotrode (10) which is rotatably mounted in the bearing shield (14), at least one anvil (12) which interacts with the sonotrode (10) in order to process the packing material,
at least one further bearing shield for rotatably mounting the anvil (12), wherein at least one coupling means (20) is provided for mechanically coupling the two bearing shields (14, 16), **characterized in that** the coupling means (20) is connected to the bearing shields (14, 16) in such a way that a rotational movement of the two bearing shields (14, 16) relative to one another is permitted.

2. Device according to Claim 1, **characterized in that** at least one bending beam is provided as a coupling means (20).

3. Device according to one of the preceding claims, **characterized in that** at least one joint or a bush-pin connection is provided as a coupling means (20).

4. Device according to one of the preceding claims, **characterized in that** at least one recess (23), in particular for influencing the bending characteristics of the coupling means (20), is provided at least in one of the bearing shields (14, 16).

5. Device according to one of the preceding claims, **characterized in that** adjusting means (50, 54, 58, 60) are provided for setting the defined gap between sonotrode (10) and anvil (12).

6. Device according to one of the preceding claims, **characterized in that** a servo drive (50), a piezoelectric actuator (60) or an eccentric disk (58) is provided as an adjusting means.

7. Device according to one of the preceding claims, **characterized in that** at least one force means (18) is provided for imparting an opposing force between the two bearing shields (14, 16).

8. Device according to one of the preceding claims, **characterized in that** at least one setting means (30) is provided for the force means (18) for adjusting the opposing force.

9. Device according to one of the preceding claims, **characterized in that** the force means (18) has at least one spring (49) which is arranged such that the two bearing shields (14, 16) are preloaded against one another.

10. Device according to one of the preceding claims, **characterized in that** force means (18) comprise at least one plunger (48) which is connected both to at least one bearing shield (14) and also to the spring (49).

11. Device according to one of the preceding claims, **characterized in that** further bearing shields (14, 16) are provided for two-sided mounting of sonotrode (10) and/or anvil (12).

## Revendications

1. Dispositif pour traiter un matériau d'emballage par ultrasons, comprenant
au moins un flasque (14),
au moins une sonotrode (10) qui est montée de manière rotative dans le flasque (14), au moins une enclume (12) qui coopère avec la sonotrode (10) pour traiter le matériau d'emballage,
au moins un flasque supplémentaire pour le support rotatif de l'enclume (12), au moins un moyen d'accouplement (20) étant prévu pour l'accouplement mécanique des deux flasques (14, 16), **caractérisé en ce que** le moyen d'accouplement (20) est connecté aux flasques (14, 16) de telle sorte qu'un mouvement de rotation des deux flasques (14, 16) l'un par rapport à l'autre soit possible.

2. Dispositif selon la revendication 1, **caractérisé en ce que** l'on prévoit comme moyen d'accouplement (20) au moins une poutre flexible.

3. Dispositif selon l'une quelconque des revendications précédentes, **caractérisé en ce que** l'on prévoit comme moyen d'accouplement (20) au moins une articulation ou une connexion à douille et boulon.

4. Dispositif selon l'une quelconque des revendications précédentes, **caractérisé en ce qu'**au moins un évidement (23) est prévu dans au moins l'un des flasques (14, 16), notamment pour influencer le comportement de flexion du moyen d'accouplement (20).

5. Dispositif selon l'une quelconque des revendications précédentes, **caractérisé en ce que** des moyens de réglage (50, 54, 58, 60) sont prévus pour ajuster la fente définie entre la sonotrode (10) et l'enclume (12).

6. Dispositif selon l'une quelconque des revendications précédentes, **caractérisé en ce que** l'on prévoit comme moyen de réglage une servocommande (50), un actionneur piézoélectrique (60) ou un disque excentrique (58).

7. Dispositif selon l'une quelconque des revendications précédentes, **caractérisé en ce qu'**au moins un élément de force (18) est prévu pour appliquer une force antagoniste entre les deux flasques (14, 16).

8. Dispositif selon l'une quelconque des revendications précédentes, **caractérisé en ce qu'**au moins un moyen d'ajustement (30) pour le moyen de force (18) est prévu pour l'ajustement de la force antagoniste.

9. Dispositif selon l'une quelconque des revendications précédentes, **caractérisé en ce que** le moyen de force (18) présente au moins un ressort (49) qui est disposé de telle sorte que les deux flasques (14, 16) soient précontraints l'un par rapport à l'autre.

10. Dispositif selon l'une quelconque des revendications précédentes, **caractérisé en ce que** des moyens de force (18) comprennent au moins un poussoir (48) qui est connecté à la fois à au moins un flasque (14) et au ressort (49).

11. Dispositif selon l'une quelconque des revendications précédentes, **caractérisé en ce que** d'autres flasques (14, 16) sont prévus pour le support des deux côtés de la sonotrode (10) et/ou de l'enclume (12).
